# EUROPEAN PATENT APPLICATION

(11) **EP 4 613 349 A1**
(43) Date of publication of application: **10.09.2025**
(21) Application number: 24020069.1
(22) Date of filing: 05.03.2024
(51) Int. Cl.: B01D 5/00, B01D 53/14

(54) **METHOD OF MODIFYING A QUENCH TOWER, QUENCH TOWER, AND METHOD AND APPARATUS FOR PRODUCING A REACTION PRODUCT**

(71) Applicant: Linde GmbH, 82049 Pullach (DE)
(72) Inventor: Bauer, Ludwig, 82049 Pullach (DE); Münch, Benjamin, 82049 Pullach (DE); Andre, Matthias, 82049 Pullach (DE); Perschmann, André, 82049 Pullach (DE)
(74) Representative: Lu, Jing

(57) **Abstract**

A method as proposed herein involves upgrading a quench tower (100) by substituting its existing first coolant circuits (20a, 20b) with a larger number of second coolant circuits (20c - 20e). This quench tower features a gas feed line (11) entering and a gas withdrawal line (12) exiting at different vertical positions, defining a vertical space. Both the original and new coolant circuits include components such as a coolant feed line (21), coolant withdrawal line (22), and tower internals in the form of coolant distribution, contacting, and collecting arrangements located within this vertical space. This vertical arrangement facilitates efficient gas and coolant interaction, with each feed and withdrawal points of the coolant circuits (20a, 20b, 20c - 20e) also defining their operational spatial relationship within the quench tower (100). A corresponding quench tower (100), and a method and an apparatus (1000) for producing a reaction product are also provided herein.

## Description

The present disclosure relates to a method of modifying a quench tower, a quench tower, and a method and an apparatus for producing a reaction product.

### Background

Quench towers are employed in various methods and apparatus for producing reaction products. Examples include methods and apparatus for steam cracking and fluidized catalytic cracking, as well as methods and apparatus for producing compounds such as vinyl chloride monomer, ethylene oxide, and ethylene glycol. In such methods and apparatus, the quench towers are used, in particular in addition to further cooling units, for reducing or "quenching" the temperature of a process gas for subsequent fractionation, for example in cryogenic fractionation steps.

For specific details regarding construction and operation of quench towers, reference is made to expert literature, such as K. Kolmetz et al., "Guidelines for Ethylene Quench Towers," AIChE Spring Meeting, Houston, TX, 2007.

There is still the desire for improvements in processes utilizing quench towers, particularly, but not limited to, steam cracking processes.

### Summary

Against this background, a method of modifying a quench tower, a quench tower, and a method and an apparatus for producing a reaction product comprising the features of the independent claims are proposed herein. Embodiments are the subject of the dependent claims and of the description that follows hereinbelow.

A method of modifying a quench tower with first coolant circuits provided in a first number of coolant circuits is proposed herein. The method comprises replacing the first coolant circuits by second coolant circuits provided in a second number of coolant circuits larger than the first number of coolant circuits.

The quench tower comprises a gas feed line into the quench tower at a gas feed position and a gas withdrawal line from the quench tower at a gas withdrawal position. The gas feed position is below the gas withdrawal position and the gas feed position and the gas withdrawal position define a vertical space therebetween when the quench tower is in an operational orientation.

Each of the first coolant circuits and the second coolant circuits comprises parts arranged in a vertical space between the gas feed position and the gas withdrawal position, including a coolant feed line into the quench tower at a coolant feed position, a coolant withdrawal line from the quench tower at a coolant withdrawal position, and tower internals including a coolant distribution arrangement, a contacting arrangement and a coolant collecting arrangement. The coolant collecting arrangement may also have the function of a gas distributing arrangement, particularly when chimney trays are used, which essentially have two functions: collecting liquid for withdrawal and distributing gas for equalized flow to contacting arrangements above.

In each of the first coolant circuits and the second coolant circuits, the coolant feed position is above the coolant withdrawal position and the coolant feed position and the coolant withdrawal position define a space therebetween in the operational orientation of the quench tower. In each of the of the first coolant circuits and the second coolant circuits, the column internals are arranged in the vertical space between the coolant feed position and the coolant withdrawal position.

Herein, particularly the coolant feed line is referred to in the singular, but this does not exclude that further coolant feed lines are provided, and the explanations herein may refer to an uppermost one of these feed lines. This also applies to the further elements mentioned below. An "operational orientation" is explained below.

The method proposed herein are advantageous for extending a capacity of a method or apparatus for producing a reaction product the quench tower is part of. Alternative solutions, which could include providing either a completely new quench tower with a larger diameter or a parallel tower can be dispensed of. Both alternative solutions are very costly and hardly economically feasible.

With the method proposed herein, a solution was found which is suitable to upgrade an existing quench tower so that the new load can be handled. An aspect of the method as proposed herein is that, e.g., an existing coolant wash in a quench tower including two coolant circuits is converted to a coolant wash including three coolant circuits. This concept enables a load increase of approx. 30% for a typical "gas cracker," i.e., a steam cracking apparatus configured for converting gaseous feeds including, in its majority, or essentially consisting of, hydrocarbons with two to four carbon atoms. The proposed solution is economically viable despite high investment costs.

The starting point for developing the solution provided herein was the fact that an existing quench water washing system was surprisingly found to contain components that can be significantly downsized or omitted according to current design practice. Further details are indicated below.

In certain embodiments as provided herein, the first number of coolant circuits is a number of one, two or three and the second number of coolant circuits is by a number of one or two larger than the first number of coolant circuits. While the present disclosure, hereinbelow, focusses on substituting two by three coolant circuits, embodiments as proposed herein are not limited to certain numbers but applicable to a large number of different modification possibilities.

In certain embodiments as provided herein, the first coolant circuits and the second coolant circuits are connected to one or more coolant pumps transporting coolant from the coolant withdrawal lines to the coolant feed lines thereof and one or more coolers cooling the coolant therebetween. An individual pump can be provided for each coolant circuit, but also a groupwise provision is possible. In certain embodiments, it can be possible to keep one or more pumps operational despite the changes made.

In certain embodiments as provided herein, at least one of the coolant distribution arrangement, the gas-liquid contacting arrangement and the coolant collecting arrangement of at least one of the second coolant circuits is reduced in size or number compared to the same parts of at least one of the first coolant circuits. As mentioned before, such embodiments are the result of the surprising finding that, in existing quench water washing systems certain components that can be significantly downsized or omitted without reducing operability.

In certain embodiments as provided herein, a gas provided by steam cracking a gaseous hydrocarbon feed is fed into the quench tower via the gas feed line, and water is used as the coolant. Advantages of the instrumentalities provided herein are particularly evident for steam cracking, as mentioned.

In certain embodiments as provided herein, a topmost coolant circuit is operated with lower coolant temperatures after replacing the first coolant circuits by the second coolant circuits than therebefore. This reduces a coolant content, particularly a water content, in a gas withdrawn from the quench tower. Furthermore, a volume stream of the gaseous components becomes smaller, and this reduces load on downstream components such as a compressor.

In certain embodiments as provided herein, the coolant withdrawal line of the topmost coolant circuit is arranged at a higher position after replacing the first coolant circuits by the second coolant circuits than therebefore. This reduces the temperature profile and the hydraulic load in the upper section of the column can be reduced and the existing tower shell can be maintained.

A quench tower transformed from a first configuration to a second configuration is also provided herein. The quench tower comprises first coolant circuits provided in a first number of coolant circuits in the first configuration and second coolant circuits provided in a second number of coolant circuits which is larger than the first number of coolant circuits in the second configuration.

The quench tower is transformed from the first configuration to the second configuration by replacing the first coolant circuits by the second coolant circuits. The quench tower comprises a gas feed line into the quench tower and a gas withdrawal line from the quench tower at a gas withdrawal position above the gas feed position. The gas feed position is below the gas withdrawal position and the gas feed position and the gas withdrawal position define vertical a space therebetween when the quench tower is in an operational orientation.

Each of the first coolant circuits and the second coolant circuits comprises parts arranged in a vertical space between the gas feed position and the gas withdrawal position, including a coolant feed line into the quench tower at a coolant feed position, a coolant withdrawal line from the quench tower at a coolant withdrawal position, and tower internals including a coolant distribution arrangement, a contacting arrangement and a coolant collecting arrangement. In each of the first coolant circuits and the second coolant circuits, the coolant feed position is above the coolant withdrawal position and the coolant feed position and the coolant withdrawal position define a space therebetween in the operational orientation of the quench tower, and, in each of the first coolant circuits and the second coolant circuits, the column internals are arranged in the vertical space between the coolant feed position and the coolant withdrawal position.

As to further details and advantages of the quench tower as provided herein, reference is made to the explanations above regarding the method proposed herein and its different embodiments. A quench tower may be provided herein according to certain embodiments already discussed for the method.

The method for producing a reaction product proposed herein includes that a reaction feed is subjected to a reaction in a reactor and a process gas stream is from an effluent from the reactor. A temperature of the process gas stream or a part thereof is reduced by quenching using a quench tower as described above. The reaction product is obtained by subjecting a cooled process gas stream withdrawn from the quench tower to a separation. As above, further embodiments and advantages have been discussed above for the modification method and its embodiments, and these explanations likewise apply for the method for producing a reaction product proposed herein and of certain embodiments thereof.

This, mutatis mutandis, applies for the apparatus for producing a reaction product proposed herein, wherein the apparatus includes a quench tower as discussed above and is configured to perform for producing a reaction product proposed herein.

### Figures

Embodiments as disclosed herein will now be described, by way of example only, with reference to accompanying drawings, in which
Figure 1 illustrates a quench tower before a modification as disclosed herein;
Figure 2 illustrates a quench tower before a modification as disclosed herein; and
Figure 3 illustrates an apparatus for producing a reaction product.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Quench towers of the type particularly relevant to the present disclosure, which were generally already used at the outset, use water as a cooling medium. The water is brought in direct contact with the process gas to be cooled using installations such as cascade trays. Quench towers typically incorporate pump-driven heat transfer sections, also referred to as pump rounds or coolant or water circuits to withdraw heat from the quench tower. This enhances the distribution of loads across the quench tower compared to removing heat solely at the top. Benefits may also include a reduction in the diameter of the upper section of a quench tower and the ability to recover heat at a more elevated temperature. Recovered heat can be leveraged within the process, leading to enhanced energy recovery and improved overall plant efficiency, sometimes referred to as specific energy consumption.

A "quench tower" in the understanding of the present disclosure is therefore a longitudinal, upright vessel with a gas feed line into the vessel for a process gas to be quenched or treated in the quench tower, a gas withdrawal line from the vessel, and with at one or more coolant circuits. The term "upright" shall refer to a vertical, or essentially vertical, orientation of a longitudinal axis of the quench tower or the vessel mentioned before, wherein "essentially vertical" may include a certain deviation from the vertical direction not exceeding 1, 2, 5, or 10 degrees, and the upright position corresponds to an operational orientation of the quench tower, i.e. an orientation it is brought into to be operational for a quenching step. The gas feed line is arranged at a gas feed position and the gas withdrawal line is arranged at a gas withdrawal position geodetically above the gas feed position. As a coolant, water is used in particular, but the present disclosure is not restricted thereto.

Each coolant circuit includes a coolant feed line into the vessel at a coolant feed position, a coolant withdrawal line from the vessel at a coolant withdrawal position geodetically below the coolant feed position when the quench tower is in an operational orientation as mentioned above, a liquid distribution arrangement connected with, and configured to be supplied by, the coolant feed line, a gas-liquid contacting arrangement, e.g. including cascade trays, configured to be supplied from above with coolant distributed by the liquid distribution arrangement and from below with a process gas supplied by the gas feed line or process gas guided through the gas risers of the chimney tray below, and a coolant collecting arrangement, e.g. including chimney trays, configured to be supplied from above with liquid having passed the liquid distribution arrangement and connected with the coolant withdrawal line, wherein the coolant withdrawal line is configured to withdraw coolant from the coolant collecting arrangement. Therefore, the coolant distribution arrangement, the gas-liquid contacting arrangement, and the coolant collecting arrangement are arranged, for each coolant circuit within the vessel of the quench tower between the first and second vertical positions, in the order mentioned from the first to the second position. The elements just mentioned for the, or all, coolant circuits are arranged in a vertical space between the gas feed line and the gas withdrawal line.

Each coolant circuit further includes pumping equipment arranged outside the tower vessel, said pumping equipment comprising individual or shared pumps for the coolant circuits, and coolers to dissipate the heat transferred to the coolant.

Quench towers for steam crackers are typically equipped with one, two, or three water circuits as coolant circuits. In general, each additional water circuit improves the energy efficiency and runtime until the next turndown of the system. However, a separate set of pumps, heat exchangers and controls may be required for each water circuit, which increases the investment required. This is why many gas crackers are built with a two-circuit quench tower.

The system selected for new plants has not been changed in revamps to date, as the necessary conversion work is very costly. As a rule, it is also not checked whether a change in the number of water circuits brings an advantage. Embodiments proposed herein are based on a study that was carried out to determine how a plant load increase by ca. 30% could be realised and what modifications would be necessary to achieve this. For the quench tower, the increase in plant load means an increase in the gas volume (in the Vρ^{0.5} ratio) of ca. 25% (as the inlet pressure of the cracked gas is also slightly increased). An unmodified quench tower can neither pass this load due to flooding of the cascade trays, nor provide the required mass and heat transfer.

Typical modifications to the quench tower have been tested (changing the cascade spacing, replacing the packing, etc.), but these are not sufficient to process the desired new load. The quench tower is the first column after the cracking furnaces and is therefore decisive or limiting for the achievable plant capacity. In order to achieve the desired new plant capacity, it would have been necessary to build either a new quench water scrubber with a larger diameter or a parallel column. Both options are very costly and hardly economically feasible. A solution had to be found to upgrade the existing column so that the new load could be handled.

The solution as provided herein, and in response to these challenges, includes that an existing two-circuit quench water wash is converted to a three-circuit wash. This concept is being pursued, according to the inventor's knowledge, for the first time in a revamp and enables the demanded load increase. The solution was found to be economically viable despite high investment costs.

As mentioned above, a starting point for developing the solution as proposed herein was the surprising finding that a typical existing quench water washing system contains components that can be significantly downsized or omitted according to current design practice. The column therefore has a free height of ca, 15 m in the centre (but a cross-section that is approx. 20% too small). Discussions revealed that this height could be used to install an additional, third water circuit. Calculations showed that the gas load in the column could be reduced to such an extent due to the additional quenching in the new, centre water circuit that the internals in the upper water circuit could carry the new load. The required mass and heat transfer can also be achieved.

The cascade trays of the lower water circuit can be modified in such a way that the new load can be passed through hydraulically. However, this modification leads to a reduction in the heat and mass transfer capacity in this section, but it was possible to prove in a simulation that this reduction is compensated for in the new middle section.

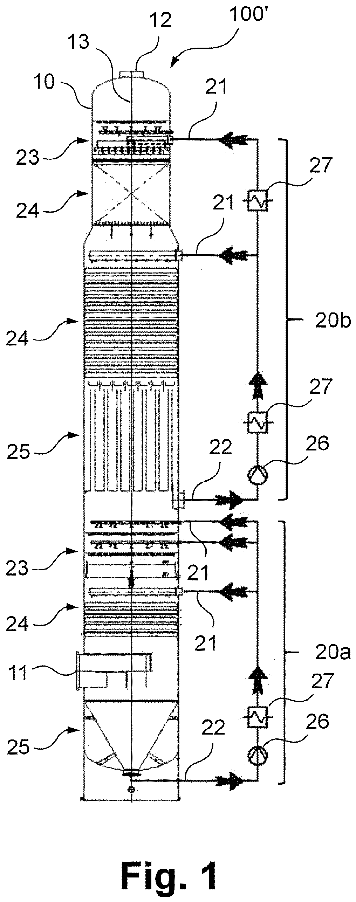

Figure 1 schematically illustrates a quench tower 100' before a modification as disclosed herein has been performed.

The quench tower 100' comprises a shell or vessel 10, a gas feed line 11 into the quench tower 100' at a gas feed position and a gas withdrawal line 12 from the quench tower 100' at a gas withdrawal position. As can be seen form Figure 1, the gas feed position is geodetically below the gas withdrawal position and the gas feed position and the gas withdrawal position define vertical a space therebetween when the quench tower 100' is in an operational orientation wherein a central axis 13 thereof is arranged vertically or essentially vertically as described above.

Two coolant circuits 20a, 20b are provided in the unmodified configuration of the quench tower 100' shown in Figure 1. Both coolant circuits 20a, 20b comprises parts arranged in a vertical space between the gas feed position and the gas withdrawal position, including coolant feed lines 21 into the quench tower 100' at a coolant feed position, a coolant withdrawal line 22 from the quench tower 100' at a coolant withdrawal position, and tower internals including coolant distribution arrangements 23, contacting arrangements 24 for providing a contact between gas and coolant, and coolant collecting arrangements 25. The coolant feed positions are above the coolant withdrawal position and the coolant feed position and the coolant withdrawal position define a space therebetween in the operational orientation of the quench tower 100' already discussed above. In each of the of the coolant circuits 20a, 20b, the column internals are arranged in the vertical space between the coolant feed position and the coolant withdrawal position. The coolant circuits 20a, 20b are connected to coolant pumps 26 transporting coolant from the coolant withdrawal lines 22 to the coolant feed lines 21 and coolers 27 cooling the coolant therebetween. A flow direction of coolant is indicated with black arrows in Figure 1.

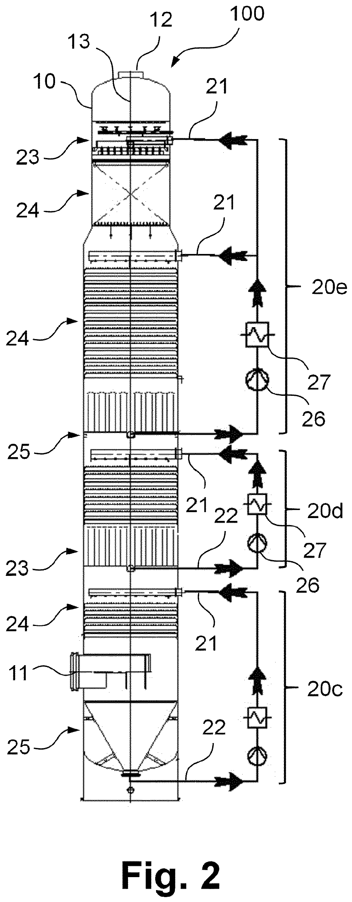

Figure 2 schematically illustrates a quench tower 100 after a modification as disclosed herein has been performed. Like reference numerals are used as in Figure 1. The quench tower 100 comprises three "second" coolant circuits 20c, 20d, 20e, which substitute the two "first" coolant circuits 20a, 20b shown in Figure 1, but the same explanations apply and the same reference numerals are used.

For transformation from the configuration shown in Figure 1 to the configuration shown in Figure 2, two cross-flow trays, two lamella separators with liquid distributors for cleaning, which are part of the coolant contact arrangements 24, and a chimney tray of about 11 metres height, which is part of the coolant collecting arrangement, was removed, as shown in comparison between Figures 1 and 2. Two new chimney trays, eight cascade trays and a new coolant distributing arrangement 23 have been installed.

This conversion increases the maximum load of the quench tower 100 and thus the system load by ca. 30%. As an alternative, a parallel quench tower would have had to be installed, which would have required additional space for the column, pipework, etc. Although the specified conversion is complex, it is limited to the inside of a column and the conversion of some (relatively large) pipework. The costs for the new installations and changes to the pipework and platforms are expensive, but there are no costs for new foundations or the installation of columns with large cranes, for example. Overall, the solution provided herein is therefore much more cost-effective than building a new parallel quench tower.

In addition to increasing the load by converting from two to three coolant circuits, there are also other advantages. The new centre circuit 20d causes the cracked gas to cool down considerably (the wash water supplied has a temperature of ca. 60°C), which also means that components that would otherwise cause fouling in the upper water circuit 20e are washed out of the cracked gas in this section at an early stage. The circulating wash water in the upper circuit 20e thus remains relatively clean and therefore the internals in the uppermost water circuit 20e, including, in an example, 15 cascade trays and one packed bed for contact arrangement 24, also remain clean.

Clean wash water without fouling-generating components is also a great advantage for the heat exchangers 27 in this circuit 20e, as cleaning cycles can be extended, for example. Because the wash water in the upper circuit 20e is (relatively) free of fouling-generating components, its temperature can also be lowered further (the temperature of the wash water at the head of the quench tower will be about 41 °C) and the cracked gas will be cooled even lower (head temperature before the conversion is 44 °C). This reduces the water content in the cracked gas and the volume flow of the hydrocarbon components is also reduced at the cooler temperature. This reduction in gas volume also relieves the downstream system components (e.g. the cracked gas compressor as the largest energy consumer in the dismantling section of the system).

The wash water from the upper (colder) coolant circuit 20e can also be drawn off at a lower level of the quench tower 100, which reduces, as mentioned, the temperature profile and the hydraulic load in the upper section of the quench tower 100 and allows the existing shell 10 to be maintained.

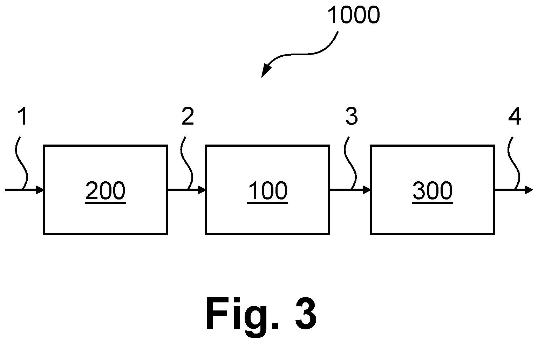

Figure 3 illustrates an apparatus 1000 for producing a reaction product 4 as proposed herein according to an embodiment. In apparatus 1000, a reaction feed 1 is subjected to a reaction in a reactor section 200 and a process gas stream 2 is formed from an effluent from the reactor section 200. A temperature of the process gas stream 2 or a part thereof is reduced by quenching using a quench tower 100 as described above. The reaction product 4 is obtained by subjecting a cooled process gas stream 3 withdrawn from the quench tower 100 to a separation 300.

## Claims

1. A method of modifying a quench tower (100) with first coolant circuits (20a, 20b) provided in a first number of coolant circuits (20a, 20b),
the method comprising replacing the first coolant circuits (20a, 20b) by second coolant circuits (20c - 20e) provided in a second number of coolant circuits (20c - 20e) larger than the first number of coolant circuits (20c - 20e),
wherein the quench tower (100) comprises a gas feed line (11) into the quench tower (100) at a gas feed position and a gas withdrawal line (12) from the quench tower (100) at a gas withdrawal position,
wherein the gas feed position is below the gas withdrawal position and the gas feed position and the gas withdrawal position define vertical a space therebetween when the quench tower (100) is in an operational orientation,
wherein each of the first coolant circuits (20a, 20b) and the second coolant circuits (20c - 20e) comprises parts arranged in a vertical space between the gas feed position and the gas withdrawal position, including:
a coolant feed line (21) into the quench tower (100) at a coolant feed position, a coolant withdrawal line (22) from the quench tower (100) at a coolant withdrawal position, and tower internals including a coolant distribution arrangement (23), a contacting arrangement (24) and a coolant collecting arrangement (25),
wherein, in each of the first coolant circuits (20a, 20b) and the second coolant circuits (20c - 20e), the coolant feed position is above the coolant withdrawal position and the coolant feed position and the coolant withdrawal position define a space therebetween in the operational orientation of the quench tower (100), and
wherein, in each of the of the first coolant circuits (20a, 20b) and the second coolant circuits (20c - 20e), the column internals are arranged in the vertical space between the coolant feed position and the coolant withdrawal position.

2. The method according to claim 1,
wherein the first number of coolant circuits (20a, 20b) is a number of one, two or three and the second number of coolant circuits (20c - 20e) is by a number of one or two larger than the first number of coolant circuits (20a, 20b).

3. The method according to claim 1 or 2,
wherein the first coolant circuits (20a, 20b) and the second coolant circuits (20c - 20d) are connected to one or more coolant pumps (26) transporting coolant from the coolant withdrawal lines (22) to the coolant feed lines (21) thereof and one or more coolers (27) cooling the coolant therebetween.

4. The method according to any one of the preceding claims,
wherein at least one of the coolant distribution arrangement (23), the gas-liquid contacting arrangement (24) and the coolant collecting arrangement (25) of at least one of the second coolant circuits (20c - 20e) is reduced in size or number compared to the same parts of at least one of the first coolant circuits (20a, 20b).

5. The method according to any one of the preceding claims,
wherein a gas provided by steam cracking a gaseous hydrocarbon feed is fed into the quench tower (100) via the gas feed line (11), and
wherein water is used as the coolant.

6. The method according to claim 5,
wherein a topmost coolant circuit (20b, 20e) is operated with lower coolant temperatures after replacing the first coolant circuits (20a, 20b) by the second coolant circuits (20c - 20e) than therebefore.

7. The method according to claim 6,
wherein the coolant withdrawal line (22) of the topmost coolant circuit (20b, 20e) is arranged at a higher position after replacing the first coolant circuits (20a, 20b) by the second coolant circuits (20c - 20e) than therebefore.

8. A quench tower (100) transformed from a first configuration to a second configuration,
wherein the quench tower (100) comprises first coolant circuits (20a, 20b) provided in a first number of coolant circuits (20a, 20b) in the first configuration and second coolant circuits (20c - 20e) provided in a second number of coolant circuits (20c - 20e) which is larger than the first number of coolant circuits (20c - 20e) in the second configuration,
wherein the quench tower (100) is transformed from the first configuration to the second configuration by replacing the first coolant circuits (20a, 20b) by the second coolant circuits (20c - 20e),
wherein the quench tower (100) comprises a gas feed line (11) into the quench tower (100) at a gas feed position and a gas withdrawal line (12) from the quench tower (100) at a gas withdrawal position,
wherein the gas feed position is below the gas withdrawal position and the gas feed position and the gas withdrawal position define vertical a space therebetween when the quench tower (100) is in an operational orientation,
wherein each of the first coolant circuits (20a, 20b) and the second coolant circuits (20c - 20e) comprises parts arranged in a vertical space between the gas feed position and the gas withdrawal position, including:
a coolant feed line (21) into the quench tower (100) at a coolant feed position, a coolant withdrawal line (22) from the quench tower (100) at a coolant withdrawal position, and tower internals including a coolant distribution arrangement (23), a contacting arrangement (24) and a coolant collecting arrangement (25),
wherein, in each of the first coolant circuits (20a, 20b) and the second coolant circuits (20c - 20e), the coolant feed position is above the coolant withdrawal position and the coolant feed position and the coolant withdrawal position define a space therebetween in the operational orientation of the quench tower (100), and
wherein, in each of the of the first coolant circuits (20a, 20b) and the second coolant circuits (20c - 20e), the column internals are arranged in the vertical space between the coolant feed position and the coolant withdrawal position.

9. A method for producing a reaction product,
wherein a reaction feed is subjected to a reaction in a reactor (200) and a process gas stream is from an effluent from the reactor (200),
wherein a temperature the process gas stream or a part thereof is reduced by quenching using a quench tower (100) according to claim 8, and
wherein the reaction product is obtained by subjecting a cooled process gas stream withdrawn from the quench tower (100) to a separation (300).

10. An apparatus (1000) for producing a reaction product,
wherein the apparatus (1000) includes a quench tower (100) according to claim 9 and is configured to perform a method according to claim 9.
